# FASCICULE DE BREVET EUROPEEN

(11) **EP 0 588 705 B1**
(45) Date de publication et mention de la délivrance du brevet: **08.04.1998**
(21) Numéro de dépôt: 93402224.5
(22) Date de dépôt: 14.09.1993
(51) Int. Cl.: B01D 53/22

(54) **Procédé et installation de séparation de gaz par perméation**
Verfahren und Vorrichtung zur Gastrennung mittels Permeation
Process and installation for gas separation by permeation

(30) Priorité: 14.09.1992 FR 9210902
(43) Date de publication de la demande: 23.03.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fillet, Frédéric, F-75015 Paris (FR)
(74) Mandataire: Le Moenner, Gabriel

(56) Documents cités:
- EP-A- 0 358 915
- EP-A- 0 362 436
- WO-A-89/06158
- WO-A-92/13628
- DE-A- 3 818 919
- US-A- 4 941 893

## Description

La présente invention concerne les procédés et installations de séparation de gaz par perméation.

Le document EP-A-0.362.436 décrit un procédé où la perméation est effectuée avec surchauffe du mélange gazeux à séparer pour limiter la condensation, sur les surfaces des membranes de perméation, des espèces condensables dans le mélange gazeux à séparer.

Le procédé connu comprend les étapes successives de :
a) comprimer un mélange gazeux à séparer, initialement à une première températurè (Ta) dans un compresseur ; pour obtenir un mélange gazeux comprimé á une température T;
b) refroidir à une deuxième température (To) le mélange gazeux comprimé pour condenser des impuretés condensables dans le mélange gazeux comprimé ;
c) épurer le mélange gazeux comprimé en impuretés condensables et/ou adsorbables et,
d) faire passer le mélange gazeux épuré dans une unité de perméation gazeuse comprenant au moins un module à membrane pour obtenir au moins un gaz de production.

On sait que les membranes de perméation connues sont très sensibles à des traces d'impuretés véhiculés dans le mélange gazeux à séparer, plus particulièrement dans le cas, le plus fréquent, où le compresseur est du type lubrifié, aux traces d'huile de lubrification et que les caractéristiques de perméation des membranes varient considérablement avec la température ambiante et celle du mélange gazeux à séparer.

La Demanderesse a constaté d'autre part que la filtration des traces d'impuretés, et plus particulièrement des traces d'huile de lubrification, peut être effectuée de façon particulièrement efficace si l'on empêche la recondensation de la vapeur d'eau contenue dans le mélange gazeux à séparer avant et durant la filtration.

La présente invention a pour objet de proposer un procédé perfectionné, de mise en oeuvre simple et fiable, permettant de garantir un fonctionnement optimisé d'une installation de séparation de gaz par perméation.

Pour ce faire, l'invention propose un procédé et une installation tels que revendiqués.

Selon d'autres caractéristiques de l'invention, la première valeur déterminée est avantageusement non inférieure à la plus élevée des deux températures suivantes : première température + 12°C, deuxième température + 5°C, cette deuxième température n'excédant pas typiquement de plus de 5°C la première température, typiquement lui étant supérieure d'une valeur comprise entre 1 et 5°C, lorsqu'on utilise un réfrigérant atmosphérique additionnel en sortie d'un compresseur d'air à réfrigérant intégré.

Selon une autre caractéristique de l'invention, la perméation dans l'unité de perméation est effectuée à une quatrième température supérieure à la troisième température, la quatrième température étant typiquement régulée de façon qu'elle ne soit pas inférieure à une deuxième valeur déterminée supérieure, typiquement d'un écart déterminé, non inférieur à 5°C, à la première valeur déterminée, la deuxième valeur déterminée étant en pratique non inférieure à 45°C.

Selon une autre caractéristique de l'invention, le procédé comporte en outre l'étape de chauffer sensiblement à la quatrième température le mélange gazeux épuré.

Selon une autre caractéristique de l'installation selon l'invention, le module à membrane est non isolé et disposé dans une deuxième enceinte isolée définissant une deuxième chambre contenant des deuxièmes moyens de chauffage de la deuxième chambre, typiquement reliés à des deuxièmes moyens de régulation de la température dans la deuxième enceinte, laquelle comprend avantageusement des troisièmes moyens de chauffage associés au tronçon de ligne et reliés à des troisièmes moyens de régulation de la température du mélange gazeux dans le tronçon de ligne.

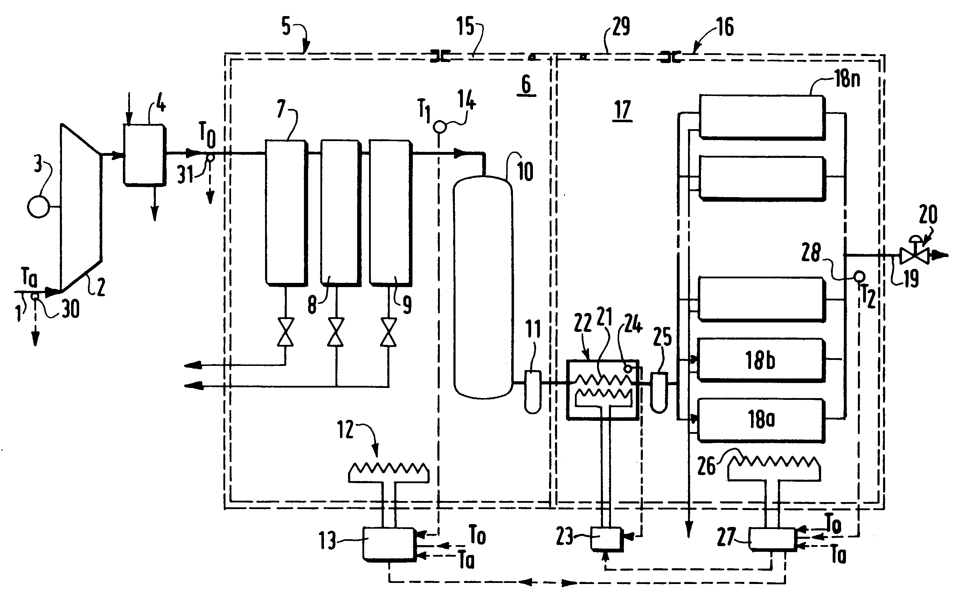

D'autres caractéristiques et avantages de la présente invention ressortiront de la description suivante d'un mode de réalisation, donnée à titre illustratif mais nullement limitatif, faite en relation avec les dessins annexés, sur lesquels :
- la figure unique représente schématiquement une installation de séparation de gaz par perméation selon l'invention.

Sur la figure unique, un mélange gazeux à séparer, en l'occurrence de l'air atmosphérique, à une température ambiante Ta, est comprimé par un compresseur 2, typiquement un compresseur à vis lubrifié pourvu d'un étage final de réfrigération, typiquement à l'air atmosphérique et entraîné par un moteur 3, à une pression n'excédant pas 15 x 10⁵ Pa abs et à une température typiquement supérieure de 10 à 15°C à la température ambiante Ta.

L'air comprimé est refroidi dans un poste de réfrigération 4, typiquement refroidi à l'air atmosphérique, à une température To n'excédant pas de plus de 5°C la température ambiante Ta, typiquement d'environ 3°C supérieure à cette dernière.

Selon un aspect de l'invention, l'air comprimé refroidi passe dans un poste d'épuration disposé dans une première enceinte isolée 5, dont toutes les parois sont revêtues d'une isolation thermique, typiquement d'un matériau isolant d'épaisseur non inférieure à 1,8 cm, et définissant une première chambre 6 dans laquelle sont disposés, en série dans la ligne de transfert de l'air comprimé, un dispositif séparateur d'eau 7, un pré-filtre coalesceur 8 d'élimination de gouttes d'huile, un coalesceur final 9, une tour 10 à charbon actif d'adsorption de vapeur d'huile et un filtre à poussières 11. Dans la chambre 6 est disposé un dispositif de chauffage 12, typiquement électrique, commandé en permanence par un dispositif 13 de régulation de la température (T₁) dans la première chambre 6 recevant des signaux d'une sonde de température 14 dans la chambre 6, d'une sonde de température 30 associée à l'entrée du compresseur 2 et d'une sonde de température 31 associée à la ligne de transfert de mélange gazeux entre le poste de réfrigération 4 et l'enceinte 5. L'enceinte 5 comporte une trappe 15 d'accès d'un opérateur à la chambre 6.

L'air comprimé épuré, à une température voisine de T₁, passe directement de la première enceinte 5 à une deuxième enceinte thermiquement isolée 16, analogue à la première enceinte 5 mais de dimensions généralement plus importantes, définissant une deuxième chambre calorifugée 17 dans laquelle est disposé au moins un, typiquement une batterie de modules de perméation en parallèle 18ᵢ, typiquement non individuellement isolés thermiquement et dont les sorties de production se raccordent à une conduite de gaz de production pourvue d'une vanne de réglage de débit 20. Le tronçon de ligne 21 d'amenée de mélange gazeux aux modules 18ᵢ traverse un dispositif de chauffage 22 disposé dans la chambre 17 et commandé par un boîtier de régulation 23 recevant un signal d'une sonde de température 24 associée au tronçon de ligne 21. Un filtre à poussières 25 est disposé en sortie du dispositif de chauffage 22.

Dans la chambre 17 est disposé un dispositif de chauffage 26, typiquement du type à résistance électrique, commandé par un dispositif de régulation 27 recevant des signaux d'une sonde de température 28 dans la chambre 17 et des sondes 30 et 31 et fournissant un signal au dispositif 23. L'enceinte 16 comporte une trappe 29 d'accès d'un opérateur dans la chambre 17.

Le fonctionnement de l'installation est le suivant :

Le dispositif de régulation 13 de la température T₁ dans la première chambre 6 régule cette température T₁ de façon qu'elle soit sensiblement égale à la plus élevée des trois température suivantes :
- 20°C,
- Ta : + 12°C,
- To : + 5°C.

Le dispositif de chauffage 12 fonctionne en permanence, qu'il y ait ou non circulation d'air comprimé dans l'installation, de façon à maintenir en permanence, et notamment dès la mise en route de l'installation, dans la première chambre 6, une température suffisamment basse pour assurer le fonctionnement optimal des dispositifs de déshuilage 8-10 et suffisamment haute pour éviter toute condensation d'eau dans ces derniers.

De façon similaire, le dispositif de chauffage 26 fonctionne en permanence pour maintenir, dans la deuxième chambre 17, et donc dans les modules 18ᵢ, une température T₂ déterminée de façon à être sensiblement égale à la plus élevée des trois températures suivantes :
- 45°C,
- Ta + 17°C,
- To + 10°C,
de façon à garantir un fonctionnement des modules de perméation 18ᵢ à une température supérieure d'au moins 4°C à la température T₁ dans la première chambre 6 mais à une température n'excédant pas un niveau excessif, qui entraînerait une dégradation des performances des membranes des modules 18ᵢ.

Ces conditions optimales de fonctionnement des modules de perméation sont d'autre part garanties par la mise en oeuvre temporaire, dès qu'un flux d'air comprimé, détecté par un pressostat (non représenté), atteint le tronçon de ligne 21, du dispositif de chauffage 22, avantageusement de type électrique mais pouvant également utiliser, au moins en partie, de la chaleur prélevée dans le circuit de refroidissement d'huile du compresseur 2. Le dispositif de régulation 23 régule la température du tronçon de ligne 21 de façon qu'elle soit identique à la température T₂ imposée par ailleurs par le dispositif de régulation 27.

L'installation représentée sur la figure unique convient tout particulièrement à la production, à partir de l'air, d'azote à une pureté supérieure à 95 %.

## Revendications

1. Procédé de séparation de gaz par perméation, comprenant les étapes suivantes :
a) comprimer un mélange gazeux à séparer, initialement à une première température (Ta), pour obtenir un mélange gazeux comprimé à une température T;
b) refroidir à une deuxième température (To) le mélange gazeux comprimé pour condenser des impuretés condensables dans le mélange gazeux comprimé;
c) épurer le mélange gazeux comprimé en impuretés condensables et/ou adsorbables, notamment en eau et en huile, et
d) faire passer le mélange gazeux épuré dans une unité de perméation gazeuse comprenant au moins un module à membrane (18ᵢ) pour obtenir au moins un gaz de production,
caractérisé en ce que la deuxième température (To) est supérieure à la première température (Ta) et en ce que l'étape d'épuration est effectuée à une troisième température (T₁) supérieure à la deuxième température (To) et régulée de façon qu'elle ne soit pas inférieure à une première valeur déterminée non inférieure à 20°C.

2. Procédé selon la revendication 1, caractérisé en ce que la deuxième température (To) est supérieure à la première température (Ta) d'une valeur comprise entre 1 et 5°C.

3. Procédé selon la revendication 2, caractérisé en ce que la première valeur n'est pas inférieure à la plus élevée des deux températures suivantes :
- première température (Ta) +12°C,
- deuxième température (To) +5°C.

4. Procédé selon l'une des revendications précédentes, caractérisé en ce que l'étape c) d'épuration comprend les étapes successives suivantes :
c₁) épuration en eau (7),
c₂) épuration en huile (8-10).

5. Procédé selon l'une des revendications précédentes, caractérisé en ce que l'étape de perméation est effectuée à une quatrième température (T₂) supérieure à la troisième température (T₁).

6. Procédé selon la revendication 5, caractérisé en ce qu'il comporte l'étape de réguler la quatrième température (T₂) de façon qu'elle ne soit pas inférieure à une deuxième valeur déterminée supérieure à la première valeur déterminée.

7. Procédé selon la revendication 6, caractérisé en ce que la différence entre la deuxième valeur et la première valeur n'est pas inférieure à 5°C.

8. Procédé selon la revendication 7, caractérisé en ce que la deuxième valeur n'est pas inférieure à 45°C.

9. Procédé selon l'une des revendications 5 à 8, caractérisé en ce qu'il comporte l'étape de chauffer (22) le mélange gazeux épuré sensiblement à la quatrième température (T₂) avant son passage dans une unité de perméation.

10. Procédé selon l'une des revendications précédentes, caractérisé en ce que le mélange gazeux à séparer est l'air.

11. Installation pour la mise en oeuvre du procédé selon l'une des revendications précédentes, comprenant, en série, un compresseur (2) de mélange gazeux, au moins un poste de réfrigération (4), au moins un poste d'épuration (7-10) et au moins un poste de séparation comprenant au moins un module à membrane (18ᵢ) et relié au poste d'épuration par un tronçon de ligne (21), caractérisée en ce que le poste d'épuration (7-10) est disposé dans une première enceinte isolée (5) aménagée entre le poste de réfrigération et le poste de séparation, et définissant une première chambre (6) contenant des premiers moyens de chauffage (12) reliés à des premiers moyens (13) de régulation de la température dans la première chambre.

12. Installation selon la revendication 11, caractérisée en ce que les premiers moyens de régulation (13) comprennent une sonde de température (14) dans la première enceinte.

13. Installation selon la revendication 11 ou la revendication 12, dans laquelle le compresseur (2) est du type lubrifié, caractérisée en ce que chaque poste d'épuration comprend au moins un filtre coalesceur (8, 9) et un dispositif d'adsorption (10).

14. Installation selon l'une des revendications 11 à 13, caractérisée en ce que le poste de séparation comprend au moins un module à membrane (18ᵢ) non isolé thermiquement disposé dans une deuxième enceinte isolée (16) aménagée en aval de la première enceinte isolée (5) et définissant une deuxième chambre (17) contenant des deuxièmes moyens (26) de chauffage de la deuxième chambre.

15. Installation selon la revendication 14, caractérisée en ce que les deuxièmes moyens de chauffage (26) sont reliés à des deuxièmes moyens (27) de régulation de la température dans la deuxième enceinte (17).

16. Installation selon la revendication 14 ou la revendication 15, caractérisée en ce que la deuxième enceinte (16) renferme des troisièmes moyens (22) de chauffage associés au tronçon de ligne (21).

17. Installation selon la revendication 16, caractérisée en ce que les troisièmes moyens de chauffage (22) sont reliés à des troisièmes moyens (23) de régulation de la température du mélange gazeux dans le tronçon de ligne (21).

18. Installation selon l'une des revendications 11 à 17, caractérisée en ce que les premiers moyens de chauffage (12) sont électriques.

19. Installation selon l'une des revendications 14 à 18, caractérisée en ce que les deuxièmes moyens de chauffage (26) sont électriques.

20. Installation selon l'une des revendications 14 à 19, caractérisée en ce qu'au moins la deuxième enceinte (16) comporte des moyens (29) d'accès d'un opérateur dans la deuxième chambre (17).

21. Installation selon l'une des revendications 14 à 20, caractérisée en ce que les première (5) et deuxième (16) enceintes sont adjacentes.

## Claims

1. Process for separating gases by permeation, comprising the following steps :
a) compressing a gaseous mixture to be separated, initially at a first temperature (Ta), to obtain a compressed gaseous mixture at a temperature T;
b) cooling the compressed gaseous mixture to a second temperature (To) to condense the condensable impurities in the compressed gaseous mixture;
c) purifying the compressed gaseous mixture from condensable and/or adsorbable impurities, in particular water and oil, and
d) passing the purified gaseous mixture through a gas permeation unit having at least one membrane module (18ᵢ) to obtain at least one production gas,
characterized in that the second temperature (To) is higher than the first temperature (Ta) and in that the purification step is carried out at a third temperature (T₁) higher than the second temperature (To) and is regulated in such a manner that it is not lower than a first specified value, not lower than 20°C.

2. Process according to claim 1, characterized in that the second temperature (To) is higher than the first temperature (Ta) by a value of between 1 and 5°C.

3. Process according to claim 2, characterized in that the first value is no lower than the higher of the following two temperatures :
- first temperature (Ta) + 12°C,
- second temperature (To) + 5°C.

4. Process according to one of the preceding claims, characterized in that the purification step c) comprises the following successive steps :
c₁) purification from water (7),
c₂) purification from oil (8-10).

5. Process according to one of the preceding claims, characterized in that the permeation step is carried out at a fourth temperature (T₂) higher than the third temperature (T₁).

6. Process according to claim 5, characterized in that it includes the step of adjusting the fourth temperature (T₂) so that it is not lower than a second specified value higher than the first specified value.

7. Process according to claim 6, characterized in that the difference between the second value and the first value is not less than 5°C.

8. Process according to claim 7, characterized in that the second value is not less than 45°C.

9. Process according to one of claims 5 to 8, characterized in that it includes the step of heating (22) the purified gaseous mixture substantially to the fourth temperature (T₂) before it is passed through a permeation unit.

10. Process according to one of the preceding claims characterized in that the gaseous mixture to be separated is air.

11. Plant for putting the process according to one of the preceding claims into practice, comprising, in series, a compressor (2) for the gaseous mixture, at least one refrigeration unit (4), at least one purification unit (7-10) and at least one separation unit having at least one membrane module (18ᵢ) and connected to the purification unit by a line section (21), characterized in that the purification unit (7-10) is located in a first insulated chamber (5) arranged between the refrigeration unit and the separation unit, and defining a first chamber (6) containing the first means of heating (12) connected to the first means (13) for regulating the temperature in the first chamber.

12. Plant according to claim 11, characterized in that the first means of regulation (13) includes a temperature probe (14) in the first chamber.

13. Plant according to claim 11 or claim 12, in which the compressor (2) is of the lubricated type, characterized in that each purification unit includes at least one coalescing filter (8,9) and an adsorption device (10).

14. Plant according to one of claims 11 to 13, characterized in that the separation unit includes at least one membrane module (18ᵢ) which is not thermally insulated situated in a second insulated chamber (16) arranged downstream from the first insulated chamber (5) and defining a second chamber (17) containing a second means (26) for heating the second chamber.

15. Plant according to claim 14, characterized in that the second means of heating (26) is connected to the second means (27) for regulating the temperature in the second chamber (17).

16. Plant according to claim 14 or claim 15, characterized in that the second chamber (16) encloses a third means (22) for heating associated with the line section (21).

17. Plant according to claim 16, characterized in that the third means of heating (22) is connected to the third means (23) for regulating the temperature of the gaseous mixture in the line section (21).

18. Plant according to one of claims 11 to 17, characterized in that the first means of heating (12) is electrical.

19. Plant according to one of claims 14 to 18, characterized in that the second means of heating (26) is electrical.

20. Plant according to one of claims 14 to 19, characterized in that at least the second chamber (16) has means (29) of access for an operator into the second chamber (17).

21. Plant according to one of claims 14 to 20, characterized in that first (5) and second (16) chambers are adjacent.

## Patentansprüche

1. Verfahren zur Zerlegung von Gas mittels Permeation, umfassend folgende Schritte:
a) Verdichten eines zu zerlegenden Gasgemisches, zuerst bei einer ersten Temperatur (Ta), um ein verdichtetes Gasgemisch bei einer Temperatur T zu erhalten;
b) Abkühlen des verdichteten Gasgemisches auf eine zweite Temperatur (To), um in dem verdichteten Gasgemisch vorliegende kondensierbare Verunreinigungen zu kondensieren;
c) Reinigen des verdichteten Gasgemischs von kondensierbaren und/oder absorbierbaren Verunreinigungen, insbesondere von Wasser und Öl, und
(d) Einleiten des gereinigten Gasgemisches in eine Gaspermeationseinheit, die mindestens ein Membranmodul (18ᵢ) enthält, um mindestens ein Produktionsgas zu erhalten,
**dadurch gekennzeichnet**, daß die zweite Temperatur (To) über der ersten Temperatur (Ta) liegt, und daß der Reinigungsschritt bei einer über der zweiten Temperatur (To) liegenden dritten Temperatur (T₁) durchgeführt wird, die so eingestellt wird, daß sie nicht unter einem ersten, nicht niedriger als 20°C festgelegten Wert liegt.

2. Verfahren nach Anspruch 1, dadurch gekennzeichnet, daß die zweite Temperatur (To) über der ersten Temperatur (Ta), die einen Wert zwischen 1 und 5°C hat, liegt.

3. Verfahren nach Anspruch 2, dadurch gekennzeichnet, daß der erste Wert nicht unterhalb der höheren der zwei folgenden Temperaturen liegt:
- erste Temperatur (Ta) +12°C
- zweite Temperatur (To) +5°C.

4. Verfahren nach einem der vorstehenden Ansprüche, dadurch gekennzeichnet, daß der Reinigungsschritt C) folgende aufeinanderfolgende Schritte umfaßt:
C₁) Entfernen von Wasser (7)
C₂) Entfernen von Öl (8-10).

5. Verfahren nach einem der vorstehenden Ansprüche, dadurch gekennzeichnet, daß der Permeationsschritt bei einer über der dritten Temperatur (T₁) liegenden, vierten Temperatur (T₂) durchgeführt wird.

6. Verfahren nach Anspruch 5, dadurch gekennzeichnet, daß es den Schritt zum Einstellen der vierten Temperatur (T₂) umfaßt, derart daß diese nicht unter einem vorbestimmten zweiten Wert liegt, der über dem ersten vorbestimmten Wert liegt.

7. Verfahren nach Anspruch 6, dadurch gekennzeichnet, daß die Differenz zwischen dem zweiten Wert und dem ersten Wert nicht kleiner als 5°C ist.

8. Verfahren nach Anspruch 7, dadurch gekennzeichnet, daß der zweite Wert nicht unter 45°C liegt.

9. Verfahren nach einem der Ansprüche 5 bis 8, dadurch gekennzeichnet, daß das gereinigte Gasgemisch, bevor es in eine Permeationseinheit strömt, ungefähr auf die vierte Temperatur (T₂) erwärmt wird (22).

10. Verfahren nach einem der vorstehenden Ansprüche, dadurch gekennzeichnet, daß das zu zerlegende Gasgemisch Luft ist.

11. Vorrichtung zur Durchführung des Verfahrens nach einem der vorstehenden Ansprüche, nacheinander umfassend einen Verdichter (2) für das Gasgemisch, mindestens eine Kühlstelle (4), mindestens eine Reinigungsstelle (7-10) und mindestens eine Zerlegungsstelle, die mindestens ein Membranmodul (18ᵢ) umfaßt und mit der Reinigungsstelle über einen Leitungsabschnitt (21) verbunden ist, dadurch gekennzeichnet, daß die Reinigungsstelle (7-10) in einem ersten, isolierten Gehäuse (5) angeordnet ist, das zwischen der Kühlstelle und der Zerlegungsstelle angeordnet ist und eine erste Kammer (6) bildet, die erste Heizmittel (12) umfaßt, die mit ersten Mitteln (13) zum Einstellen der Temperatur in der ersten Kammer verbunden sind.

12. Vorrichtung nach Anspruch 11, dadurch gekennzeichnet, daß die ersten Einstellmittel (13) eine Temperatursonde (14) in dem ersten Gehäuse umfassen.

13. Vorrichtung nach Anspruch 11 oder Anspruch 12, bei der der Verdichter (2) ein geschmierter Verdichter ist, dadurch gekennzeichnet, daß jede Reinigungsstelle mindestens einen Koaleszenzfilter (8, 9) und eine Adsorptionseinrichtung (10) umfaßt.

14. Vorrichtung nach einem der Ansprüche 11 bis 13, dadurch gekennzeichnet, daß die Zerlegungsstelle mindestens ein thermisch nicht isoliertes Membranmodul (18ᵢ) umfaßt, das in einem zweiten isolierten Gehäuse (16) angeordnet ist, das stromab von dem ersten isolierten Gehäuse (5) liegt und eine zweite Kammer (17) bildet, die zweite Mittel (26) zum Erhitzen der zweiten Kammer umfaßt.

15. Vorrichtung nach Anspruch 14, dadurch gekennzeichnet, daß die zweiten Mittel zum Erhitzen (26) mit zweiten Mitteln (27) zum Einstellen der Temperatur in dem zweiten Gehäuse (17) verbunden sind.

16. Vorrichtung nach Anspruch 14 oder Anspruch 15, dadurch gekennzeichnet, daß das zweite Gehäuse (16) dritte Heizmittel (22) enthält, die mit dem Leitungsabschnitt (21) verbunden sind.

17. Vorrichtung nach Anspruch 16, dadurch gekennzeichnet, daß die dritten Heizmittel (22) mit dritten Mitteln (23) zum Einstellen der Temperatur des Gasgemisches in dem Leitungsabschnitt (21) verbunden sind.

18. Vorrichtung nach einem der Ansprüche 11 bis 17, dadurch gekennzeichnet, daß die ersten Heizmittel (12) vom elektrischen Typ sind.

19. Vorrichtung nach einem der Ansprüche 14 bis 18, dadurch gekennzeichnet, daß die zweiten Heizmittel (26) vom elektrischen Typ sind.

20. Vorrichtung nach einem der Ansprüche 14 bis 19, dadurch gekennzeichnet, daß mindestens das zweite Gehäuse (16) Mittel (29) für den Zugang von Personal zu der zweiten Kammer (17) umfaßt.

21. Vorrichtung nach einem der Ansprüche 14 bis 20, dadurch gekennzeichnet, daß das erste (5) und das zweite (16) Gehäuse aneinandergrenzen.
